# EUROPEAN PATENT APPLICATION

(11) **EP 4 668 449 A1**
(43) Date of publication of application: **24.12.2025**
(21) Application number: 24863079.0
(22) Date of filing: 21.08.2024
(51) Int. Cl.: H01M 50/325, H01M 50/367, H01M 50/291, H01M 50/271, H01M 50/211, H01M 50/249

(54) **BATTERY PACK**

(30) Priority: 08.09.2023 KR 20230119904; 16.08.2024 KR 20240109873
(71) Applicant: LG Energy Solution, Ltd., Seoul 07335 (KR)
(72) Inventor: KIM, Kwang-Mo, Daejeon 34122 (KR); PARK, Min-Soo, Daejeon 34122 (KR); YUN, Hyun-Seop, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/012430
(87) International publication number: WO 2025/053498

(57) **Abstract**

Disclosed is a battery pack. The battery pack includes a case having an open upper surface and providing an inner space; a plurality of battery cells accommodated in the inner space and extending in a left and right direction; a partition wall configured to partition the inner space; a spacer provided at an upper end of the partition wall; and a pack cover configured to cover the upper surface of the case and coupled to the spacer.

## Description

### TECHNICAL FIELD

The present disclosure relates to a battery pack.

The present application claims priority to Korean Patent Application No. 10-2023-0119904 filed on September 8, 2023 in the Republic of Korea and Korean Patent Application No. 10-2024-0109873 filed on August 16, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved electrical safety when a thermal event occurs.

The present disclosure is also directed to providing a battery pack including a structure capable of rapidly discharging venting gas, ignitable particles, flames, etc. when a thermal event occurs.

The present disclosure is also directed to providing a battery pack allowing easy venting control when a thermal event occurs.

### Technical Solution

In one aspect of the present disclosure, there is provided a battery pack comprising: a case having an open upper surface and providing an inner space; a plurality of battery cells accommodated in the inner space and extending in a left and right direction; a partition wall configured to partition the inner space; a spacer provided at an upper end of the partition wall; and a pack cover configured to cover the upper surface of the case and coupled to the spacer.

In addition, the pack cover may be configured to be movable outward when a thermal event occurs from the plurality of battery cells.

In addition, the battery pack may be configured such that when a thermal event occurs from the plurality of battery cells, a gap between the pack cover and the partition wall expands.

In addition, the battery pack may further comprise a module case configured to accommodate the plurality of battery cells.

In addition, the module case may have a venting hole in an upper surface.

In addition, the partition wall may include a first partition wall extending in the left and right direction.

In addition, the battery pack may further comprise a pair of end covers provided at left and right sides of the module case, respectively, and the spacer may be located between the pair of end covers.

In addition, the venting hole may be provided in plurality, and the spacer may include a first spacer provided in the first partition wall and located at a left or right side rather than the plurality of venting holes.

In addition, a height of the first partition wall may be less than or equal to a height of the module case.

In addition, the partition wall may include a second partition wall extending in a front and rear direction, and the spacer may include a second spacer provided in the second partition wall.

In addition, a height of the second partition wall may be less than or equal to a height of the module case.

In addition, the partition wall and the spacer may be configured integrally.

In addition, the battery pack may further comprise a fastening member configured to fasten the pack cover and the spacer.

In addition, the pack cover may have a fastening hole coupled with the spacer and extending long in the left and right direction.

In addition, the battery pack may further comprise a venting device provided to the case.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, it is possible to facilitate venting control of a battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure.
FIG. 2 is a drawing showing the battery pack of FIG. 1 in which some components are exploded.
FIG. 3 is a drawing showing the battery module of FIG. 2.
FIG. 4 is a drawing showing the battery module of FIG. 3 in which some components are exploded.
FIG. 5 is a drawing showing the battery pack of FIG. 1 in which some components are exploded.
FIG. 6 is an enlarged view of FIG. 5.
FIG. 7 is an exploded view showing some components of the battery pack according to an embodiment of the present disclosure.
FIG. 8 is a partial cross-sectional view, taken along the line C-C' of FIG. 1.
FIG. 9 is a drawing showing a part D of FIG. 8.
FIG. 10 is a drawing showing the part D of FIG. 8 when a thermal event occurs.
FIG. 11 is a drawing showing a battery pack according to another embodiment of the present disclosure in which some components are exploded.
FIG. 12 is a drawing showing a modified embodiment of FIG. 8.
FIG. 13 is a drawing showing a partition wall of a battery pack according to still another embodiment of the present disclosure.
FIG. 14 is a perspective view showing some components of the battery pack according to still another embodiment of the present disclosure.
FIG. 15 is a drawing showing the battery pack of FIG. 14 when a thermal event occurs.
FIG. 16 is a partial cross-sectional view, taken along the line A-A' of FIG. 1.
FIG. 17 is a drawing showing a part E of FIG. 16.
FIG. 18 is a drawing showing the part E of FIG. 16 when a thermal event occurs.
FIG. 19 is a partial cross-sectional view, taken along the line B-B' of FIG. 1.
FIG. 20 is a drawing showing a part F of FIG. 19.
FIG. 21 is a plan view showing a battery pack according to an embodiment of the present disclosure.
FIG. 22 is a drawing showing the battery pack of FIG. 21 when a thermal event occurs.
FIG. 23 is a perspective view showing the battery pack according to an embodiment of the present disclosure when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

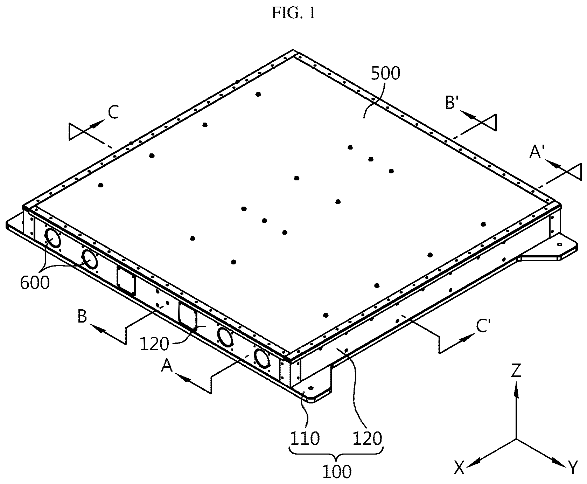

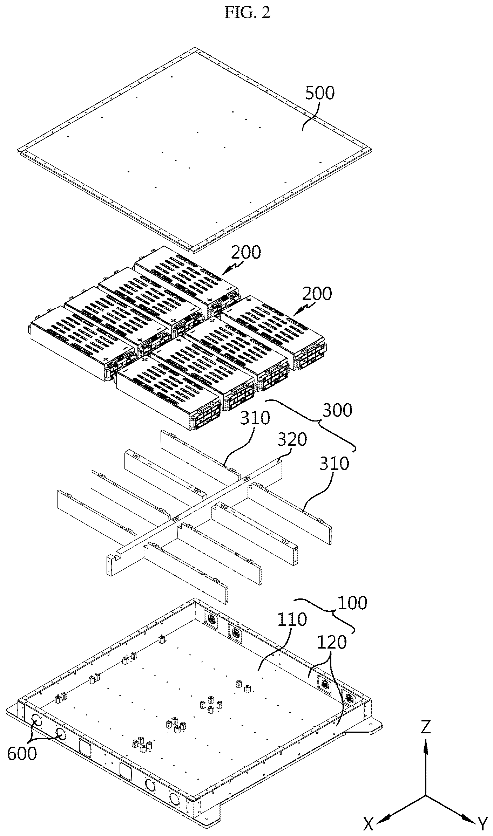

FIG. 1 is a perspective view showing a battery pack according to an embodiment of the present disclosure. FIG. 2 is a drawing showing the battery pack of FIG. 1 in which some components are exploded. Referring to FIGS. 1 and 2, the battery pack according to an embodiment of the present disclosure may include a case 100, a battery cell 220, a partition wall 300, a spacer 400, and a pack cover 500.

The case 100 may have a rectangular parallelepiped shape. The case 100 may have an open upper surface. The case 100 may provide a space therein. The case 100 may include a base plate 110 and a side wall 120. The base plate 110 may have a rectangular shape. The side wall 120 may be fastened, coupled, or fixed to the upper surface of the base plate 110. The side wall 120 may extend along the periphery of the base plate 110.

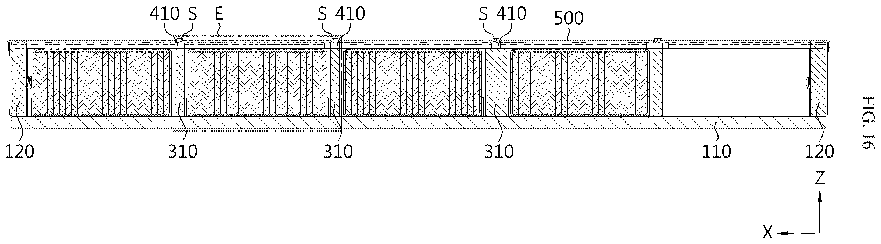

The battery cell 220 (see FIGS. 16 to 18) may be provided in plurality. The battery cell 220 may mean a secondary battery. The battery cell 220 may have a pouch shape. In addition, the battery cell 220 may be accommodated in the space provided by the case 100. The battery cell 220 may extend in the left and right direction or the Y-axis direction. The plurality of battery cells 220 may be arranged, stacked, or aligned in the front and rear direction or the X-axis direction.

The partition wall 300 may partition the inner space. The partition wall 300 may partition the inner space into a plurality of spaces, and the plurality of battery cells 220 may be accommodated in the spaces partitioned by the partition wall 300.

The spacer 400 may be provided at the upper end of the partition wall 300. The spacer 400 may be provided in plurality.

The pack cover 500 may have a rectangular shape. The pack cover 500 may have a plate shape. The pack cover 500 may be coupled to the open portion of the case 100. The pack cover 500 may cover the upper surface of the case 100. The pack cover 500 may be coupled to the spacer 400. Also, the pack cover 500 may be coupled, fixed or fastened to the side wall 120.

A space may be formed between the partition wall 300 and the pack cover 500 due to the spacer 400. When a thermal event occurs, venting gas g, ignitable particles, or flames emitted from the battery cell 220 may flow through the space between the partition wall 300 and the pack cover 500 and be discharged to the outside of the battery pack.

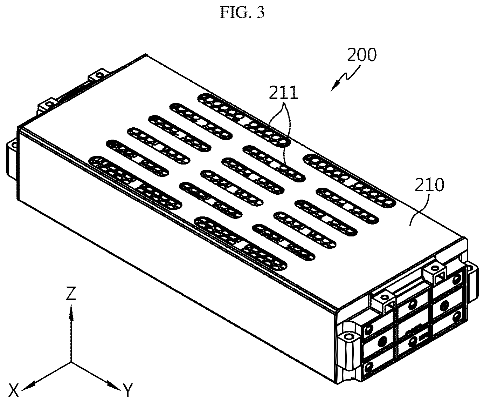

FIG. 3 is a drawing showing the battery module 200 of FIG. 2. Referring to FIGS. 1 to 3, the battery pack according to an embodiment of the present disclosure may include a battery module 200. The battery module 200 may be provided in plurality. The battery module 200 may include a module case 210. The module case 210 may have a rectangular parallelepiped shape. The module case 210 may provide a space therein. Also, each battery module 200 may include a plurality of battery cells 220. The plurality of battery cells 220 may be accommodated inside the module case 210. The battery modules 200 may be accommodated in the spaces partitioned by the partition wall 300.

The battery pack may improve the output of the battery pack by including a plurality of battery modules 200. In addition, by monitoring the state of the battery cells 220 in units of the battery modules 200, the management efficiency of the battery pack may be improved.

Referring to FIGS. 1 to 3, the module case 210 of the battery pack according to an embodiment of the present disclosure may have a venting hole 211 in an upper surface. The venting hole 211 may be provided in plurality.

When a thermal event occurs, venting gas g, ignitable particles or flames discharged from the battery cell 220 may be discharged in the upper direction or in the Z-axis direction through the venting hole 211 of the module case 210. Also, the venting gas g, ignitable particles or flames may flow through the space between the partition wall 300 and the pack cover 500 and be discharged to the outside of the battery pack.

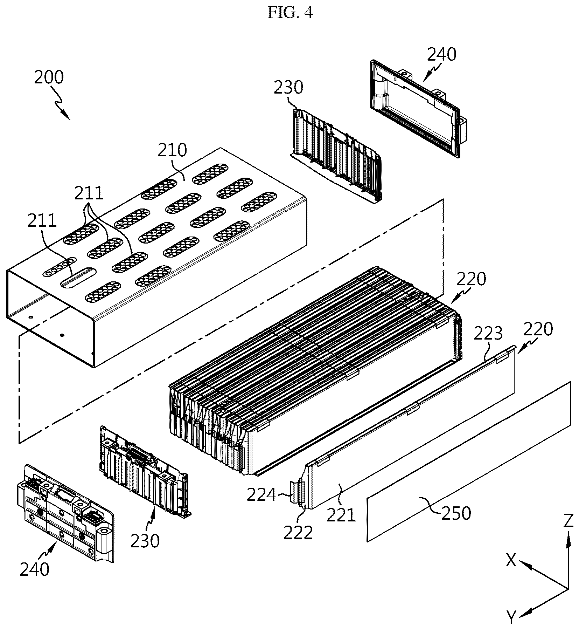

FIG. 4 is a drawing showing the battery module of FIG. 3 in which some components are exploded. Referring to FIG. 4, the module case 210 may have a top plate, a bottom plate, and a pair of side plates. The module case 210 may have a shape in which the left side is open. The module case 210 may have a shape in which the right side is open. The module case 210 may have a venting hole 211 in the top plate. The venting hole 211 may communicate the inside and the outside of the module case 210.

The plurality of battery cells 220 may be stacked in the front and rear direction or the X-axis direction. At this time, the battery cell 220 may mean a secondary battery. The battery cell 220 may include an accommodation portion 221 accommodating an electrode assembly, a first sealing portion 222 protruding to the left and right sides of the accommodation portion 221, and a second sealing portion 223 protruding above the accommodation portion 221. In addition, the battery cell 220 may include electrode leads 224 protruding to the left and right sides of the first sealing portion 222, respectively. In particular, the battery cell 220 may be a pouch-type secondary battery. Each battery cell 220 may extend along the left and right direction or the Y-axis direction. The electrode leads 224 may protrude to the left and right sides of each battery cell 220.

A pad 250 may be disposed between the plurality of battery cells 220. The pad 250 may be disposed between at least some of the battery cells 220 and/or on the periphery of the stack. The pad 250 may contain an elastic material capable of absorbing swelling of the battery cells 220. For example, the pad 250 may be made of a foam material such as polyurethane. Alternatively, the pad 250 may contain a material capable of blocking heat or flame. For example, the pad 250 may contain an insulating or fire-retardant material such as silicone or mica.

A bus bar frame assembly 230 may be provided at the left side of the plurality of battery cells 220. The bus bar frame assembly 230 may be provided at the right side of the plurality of battery cells 220. The bus bar frame assembly 230 may be electrically connected to the electrode leads 224 of the plurality of battery cells 220.

An end cover 240 may be coupled to the left side of the module case 210. The end cover 240 may be coupled to the right side of the module case 210. The end cover 240 may cover the inner space of the module case 210. The end cover 240 may have a square shape. The end cover 240 may form the outer appearance of the battery module 200.

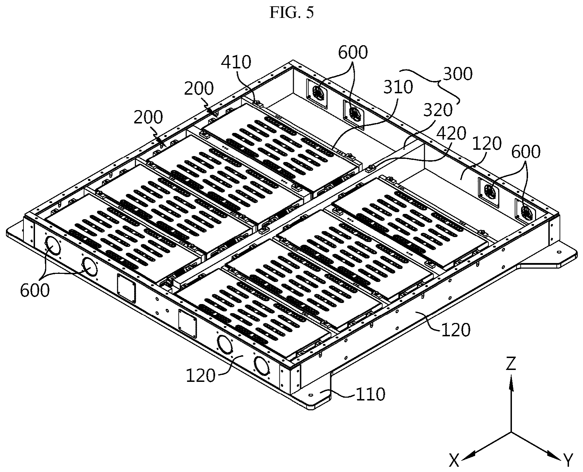

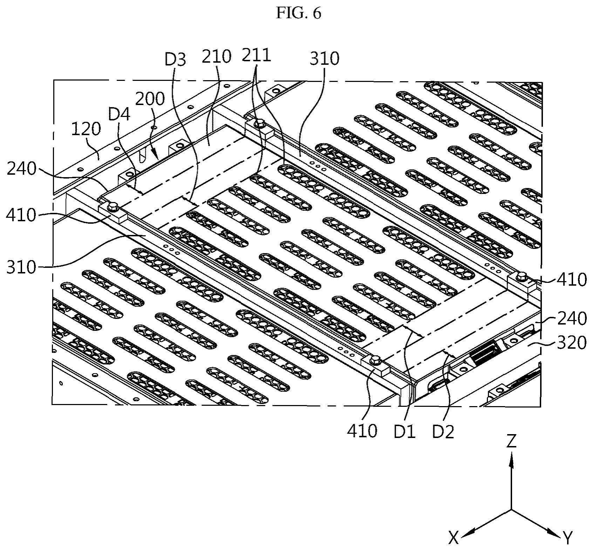

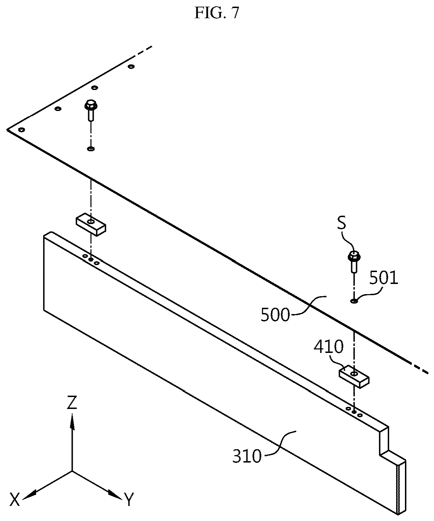

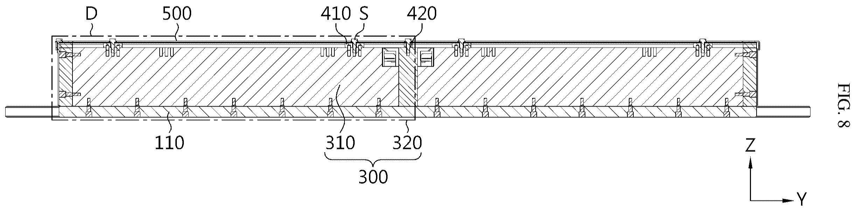

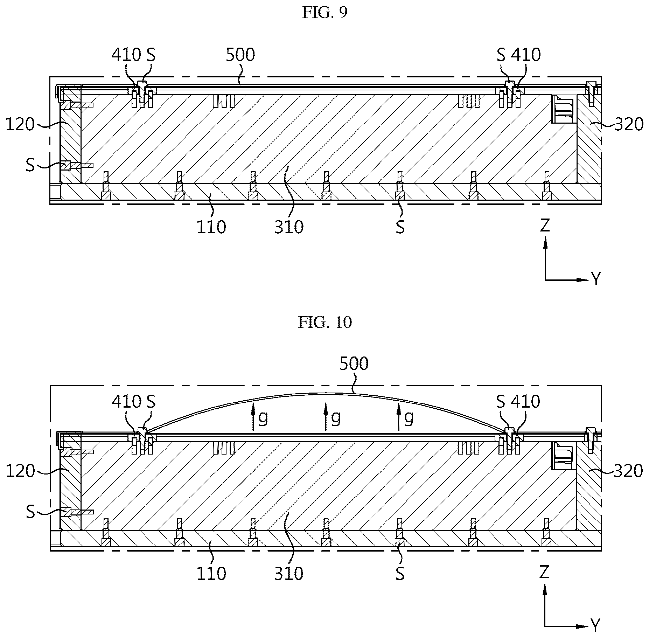

FIG. 5 is a drawing showing the battery pack of FIG. 1 in which some components are exploded. FIG. 6 is an enlarged view of FIG. 5. FIG. 7 is an exploded view showing some components of the battery pack according to an embodiment of the present disclosure. FIG. 8 is a partial cross-sectional view, taken along the line C-C' of FIG. 1. FIG. 9 is a drawing showing a part D of FIG. 8. FIG. 10 is a drawing showing the part D of FIG. 8 when a thermal event occurs.

Referring to FIGS. 5 to 10, the partition wall 300 of the battery pack according to an embodiment of the present disclosure may include a first partition wall 310. The first partition wall 310 may extend in the left and right direction or the Y-axis direction. The first partition wall 310 may be provided in plurality. The plurality of first partition walls 310 may be arranged, aligned, or positioned along the front and rear direction or the X-axis direction. The battery module 200 may be positioned between adjacent first partition walls 310 and between the first partition wall 310 and the side wall 120.

The first partition wall 310 may improve the rigidity of the battery pack. In addition, the plurality of first partition walls 310 may stably support the battery module 200 and the pack cover 500.

Referring to FIGS. 5 to 10, the pack cover 500 of the battery pack according to an embodiment of the present disclosure may be configured to be movable outward when a thermal event occurs from the plurality of battery cells 220. Alternatively, the battery pack according to an embodiment of the present disclosure may be configured such that a gap between the pack cover 500 and the partition wall 300 expands when a thermal event occurs from the plurality of battery cells 220.

When a thermal event occurs from the plurality of battery cells 220, venting gas g, ignitable particles or flames may be discharged upward through the venting hole 211 and may push the pack cover 500 outward. This may cause the gap between the pack cover 500 and the partition wall 300 to expand.

When a thermal event occurs, the pack cover 500 may protrude or deform outward, thereby expanding the space through which venting gas g, ignitable particles, or flames flow. As a result, the venting gas g, ignitable particles, or flames may flow through the space between the partition wall 300 and the pack cover 500 and be quickly discharged to the outside of the battery pack.

Referring to FIGS. 5 to 10, the spacer 400 of the battery pack according to an embodiment of the present disclosure may include a first spacer 410 provided in the first partition wall 310. The first spacer 410 may be provided in plurality. One first partition wall 310 may have a pair of first spacers 410.

In addition, the venting hole 211 may be provided in plurality. The pair of first spacers 410 may be located at the left or right sides rather than the plurality of venting holes 211. Alternatively, the plurality of venting holes 211 may be located or distributed between the pair of first spacers 410. When a thermal event occurs, the pack cover 500 between the pair of first spacers 410 may protrude, expand, or deform outward.

The first spacer 410 may be positioned at the left side rather than the venting hole 211, which is located at the leftmost side. The first spacer 410 may be positioned at the left side rather than the venting hole 211, which is located at the leftmost side, by a distance D3.

The first spacer 410 may be positioned at the right side rather than the venting hole 211, which is located at the rightmost side. The first spacer 410 may be positioned at the right side rather than the venting hole 211, which is located at the rightmost side, by a distance D1.

Since the plurality of venting holes 211 are positioned between the pair of first spacers 410, the coupling portion of the first spacer 410 and the pack cover 500 may not obstruct the discharge of venting gas g, ignitable particles or flames. As a result, the pressure of the venting gas g, ignitable particles or flames may easily push the pack cover 500 outward.

Referring to FIGS. 5 to 10, the first spacer 410 may be located at the right side rather than the left end cover 240. The first spacer 410 may be located at the right side rather than the left end cover 240 by a distance D4.

The first spacer 410 may be located at the left side rather than the right end cover 240. The first spacer 410 may be located at the left side rather than the right end cover 240 by a distance D2.

The first spacer 410 may be located between the pair of end covers 240.

The first spacer 410 may facilitate the movement of the pack cover 500 without impeding the flow of the venting gas g.

Referring to FIGS. 5 to 10, the battery pack according to an embodiment of the present disclosure may further include a fastening member S that fastens the pack cover 500 and the spacer 400.

The fastening member S may fasten, couple fix secure the pack cover 500, the spacer 400 and the partition wall 300. The fastening member S may penetrate the fastening hole 501 of the pack cover 500.

Also, the fastening member S may fasten, couple, or fix the side wall 120 and the first partition wall 310. Also, the fastening member S may fasten, couple, or fix the base plate 110 and the first partition wall 310.

The spacer 400 may support the pack cover 500 while allowing deformation of the pack cover 500.

Referring to FIGS. 5 to 10, the partition wall 300 and the spacer 400 of the battery pack according to an embodiment of the present disclosure may be configured integrally.

Since the partition wall 300 and the spacer 400 are formed integrally, the rigidity of the battery pack may be improved. Since the partition wall 300 and the spacer 400 are formed integrally, the assembling efficiency of the battery pack may be improved.

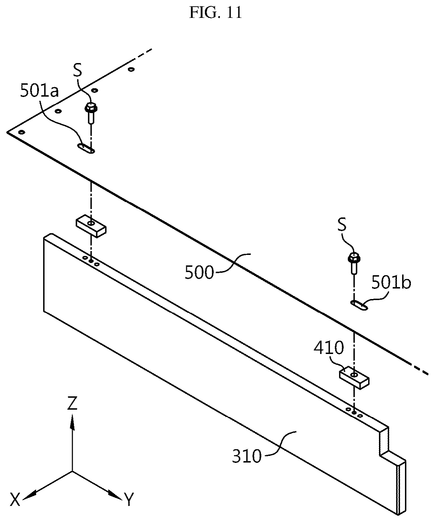

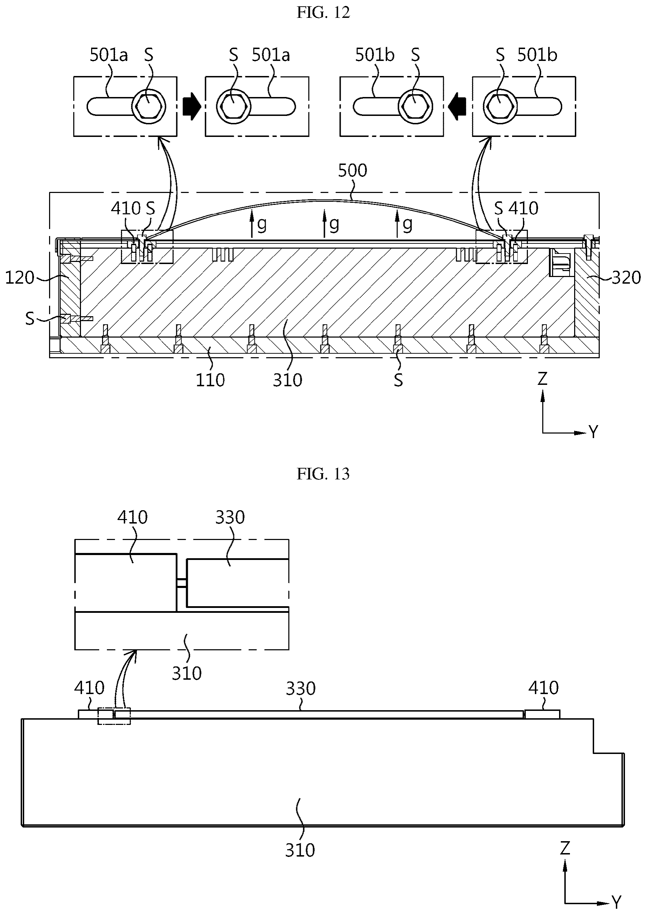

FIG. 11 is a drawing showing a battery pack according to another embodiment of the present disclosure in which some components are exploded. FIG. 12 is a drawing showing a modified embodiment of FIG. 8. Referring to FIGS. 11 and 12, the fastening holes 501a and 501b of the pack cover 500 according to the modified embodiment of the present disclosure may be extended long in the left and right direction or the Y-axis direction.

The fastening member S may be fastened to the right end of the left fastening hole 501a. When a thermal event occurs, the pack cover 500 may be deformed, protruded, or expanded outward, and the left fastening hole 501a may be moved. As a result, the fastening member S may be located at the left end of the left fastening hole 501a.

Also, the fastening member S may be fastened to the left end of the right fastening hole 501b. When a thermal event occurs, the pack cover 500 may be deformed, protruded, or expanded outward, and the right fastening hole 501b may be moved. As a result, the fastening member S may be located at the right end of the right fastening hole 501b.

The fastening holes 501a and 501b may provide a movement margin to allow the pack cover 500 to easily deform, protrude, or expand. This may improve the thermal stability of the battery pack.

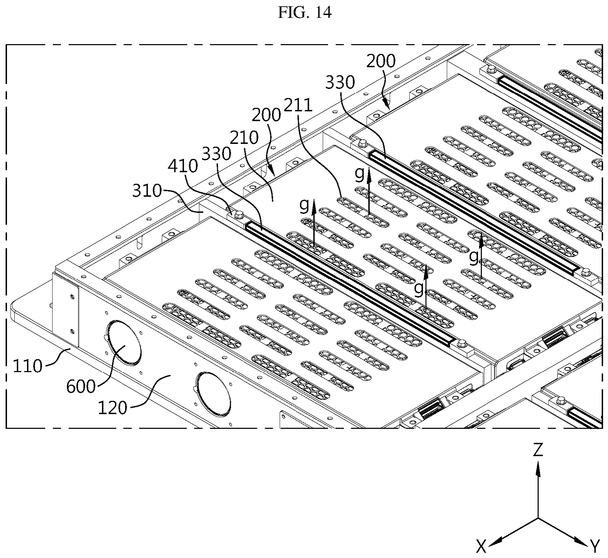

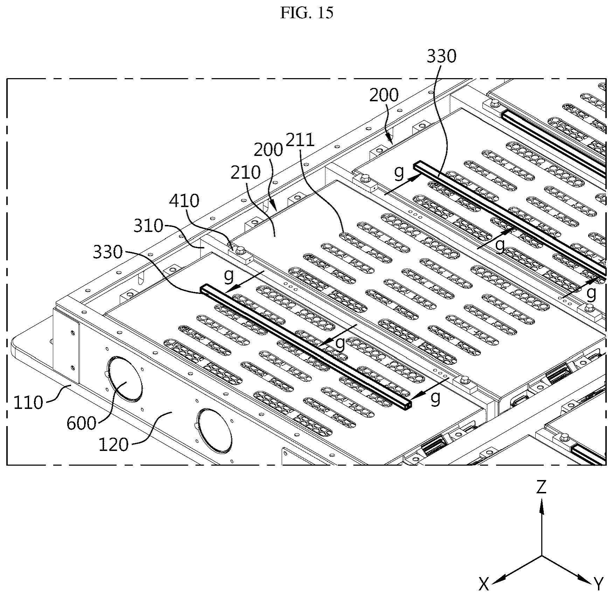

FIG. 13 is a drawing showing a partition wall of a battery pack 300 according to still another embodiment of the present disclosure. FIG. 14 is a perspective view showing some components of the battery pack according to still another embodiment of the present disclosure. FIG. 15 is a drawing showing the battery pack of FIG. 14 when a thermal event occurs.

Referring to FIGS. 13 to 15, the battery pack according to another embodiment of the present disclosure may include an auxiliary wall 330. FIGS. 14 and 15 illustrate the pack cover 500 with the pack cover omitted. The auxiliary wall 330 may be provided between the pair of first spacers 410. The auxiliary wall 330 may cover the space between the pair of first spacers 410. Both side ends of the auxiliary wall 330 may be connected to the pair of first spacers 410. A portion where the auxiliary wall 330 and the first spacer 410 are connected may be configured to have a structure that is easily disconnected. When a thermal event occurs, the auxiliary wall 330 may be separated from the first spacer 410 by the ejection pressure of the venting gas g, ignitable particles, or flame.

The auxiliary wall 330 may block heat transfer by covering the space between the first spacer 410 in normal operation. However, in cases where rapid heat dissipation is required, such as when a thermal event occurs, the auxiliary wall may be easily separated, thereby easily discharging the venting gas g, ignitable particles, or flames to the outside of the battery pack.

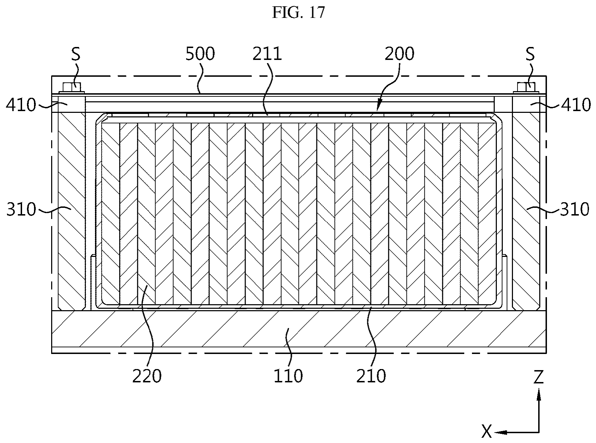

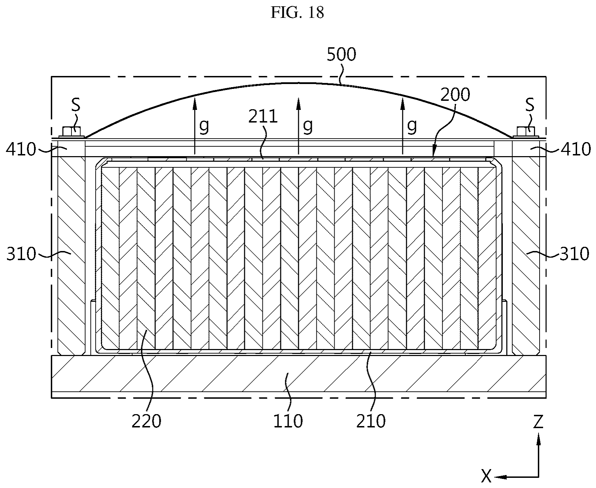

FIG. 16 is a partial cross-sectional view, taken along the line A-A' of FIG. 1. FIG. 17 is a drawing showing a part E of FIG. 16. FIG. 18 is a drawing showing the part E of FIG. 16 when a thermal event occurs.

Referring to FIGS. 16 to 18, the height of the first partition wall 310 of the battery pack according to an embodiment of the present disclosure may be less than or equal to the height of the module case 210.

Since the height of the first partition wall 310 is configured to be less than or equal to the height of the module case 210, the flow of the venting gas g, ignitable particles, or flames may be facilitated through the space between the pack cover 500 and the first partition wall 310.

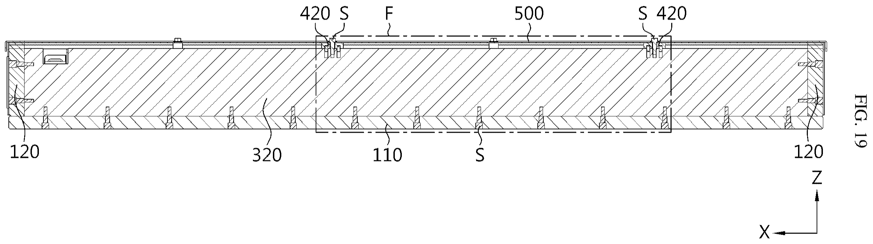

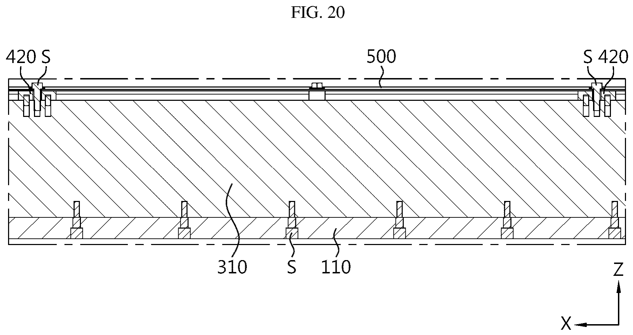

FIG. 19 is a partial cross-sectional view, taken along the line B-B' of FIG. 1. FIG. 20 is a drawing showing a part F of FIG. 19.

Referring to FIGS. 19 and 20, the partition wall 300 of the battery pack according to an embodiment of the present disclosure may include a second partition wall 320. The second partition wall 320 may extend in the front and rear direction or the X-axis direction. The second partition wall 320 may be provided in plurality and located between the first partition walls 310. Also, the second partition wall 320 may be positioned between the plurality of battery modules 200.

Also, the spacer 400 of the battery pack according to an embodiment of the present disclosure may include a second spacer 420 provided in the second partition wall 320. The second spacer 420 may be provided in plurality.

The second partition wall 320 may improve the rigidity of the battery pack. In addition, the second partition wall 320 may stably support the battery module 200 and the pack cover 500.

The venting gas g, ignitable particles or flames may flow into the space between the second partition wall 320 and the pack cover 500. This may improve the thermal stability of the battery pack.

Referring to FIGS. 9, 10, 19, and 20, the height of the second partition wall 320 of the battery pack according to an embodiment of the present disclosure may be less than or equal to the height of the module case 210.

Since the height of the second partition wall 320 is configured to be less than or equal to the height of the module case 210, the flow of the venting gas g, ignitable particles, or flames may be facilitated through the space between the pack cover 500 and the second partition wall 320.

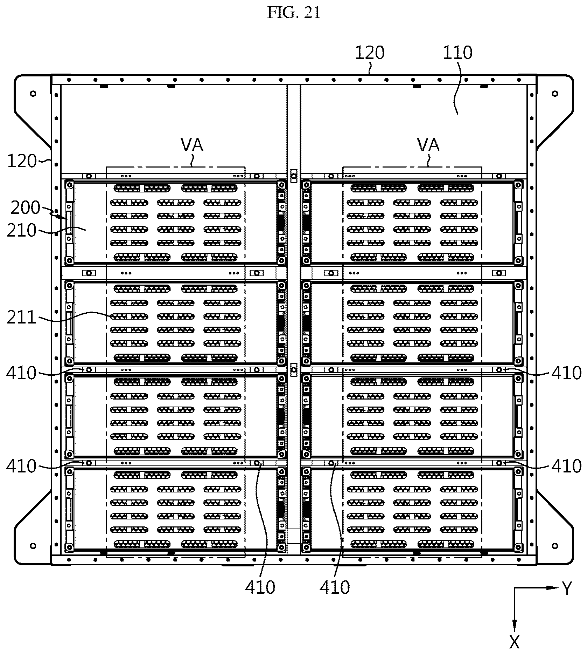

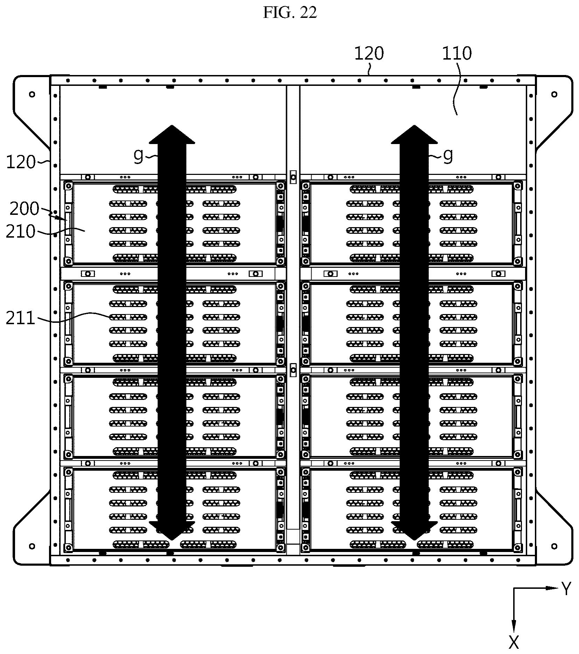

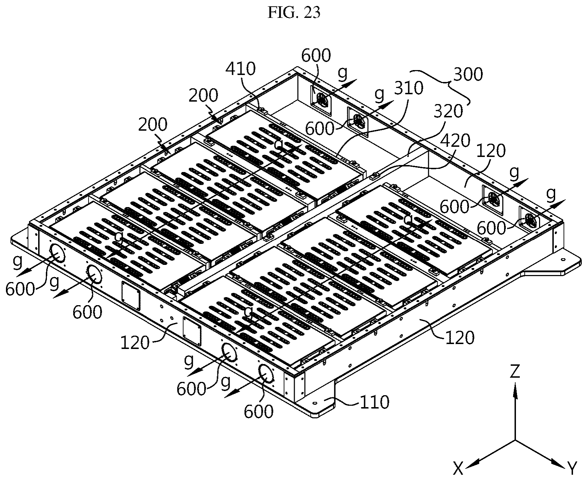

FIG. 21 is a plan view showing a battery pack according to an embodiment of the present disclosure. FIG. 22 is a drawing showing the battery pack of FIG. 21 when a thermal event occurs. FIG. 23 is a perspective view showing the battery pack according to an embodiment of the present disclosure when a thermal event occurs. FIGS. 21 to 23 are illustrated with the pack cover 500 omitted.

Referring to FIGS. 21 to 23, the first spacer 410 of the battery pack according to an embodiment of the present disclosure may be provided at the outer side of a region VA where a plurality of venting holes 211 are formed. For example, the first spacer 410 may be provided at the left or right side of the region VA in which a plurality of venting holes 211 are formed. As a result, expansion, deformation, or protrusion of the pack cover 500 may be facilitated.

When a thermal event occurs, venting gas g, ignitable particles or flames may flow in the front and rear direction or in the X-direction.

Referring to FIGS. 21 to 23, the battery pack according to an embodiment of the present disclosure may include a venting device 600 provided to the case 100. The venting device 600 may be provided in plurality. For example, the venting device 600 may be a valve that is opened and closed depending on internal pressure. The venting device 600 may be provided to the side wall 120 at the front side and the side wall 120 at the rear side.

When a thermal event occurs, venting gas g, ignitable particles or flames may flow in the front and rear direction or in the X-axis direction and may be discharged to the outside of the battery pack through the venting device 600.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case having an open upper surface and providing an inner space;
a plurality of battery cells accommodated in the inner space and extending in a left and right direction;
a partition wall configured to partition the inner space;
a spacer provided at an upper end of the partition wall; and
a pack cover configured to cover the upper surface of the case and coupled to the spacer.

2. The battery pack according to claim 1,
wherein the pack cover is configured to be movable outward when a thermal event occurs from the plurality of battery cells.

3. The battery pack according to claim 1,
wherein when a thermal event occurs from the plurality of battery cells, a gap between the pack cover and the partition wall is configured to expand.

4. The battery pack according to claim 1, further comprising:
a module case configured to accommodate the plurality of battery cells.

5. The battery pack according to claim 4,
wherein the module case has a venting hole in an upper surface.

6. The battery pack according to claim 5,
wherein the partition wall includes a first partition wall extending in the left and right direction.

7. The battery pack according to claim 5, further comprising:
a pair of end covers provided at left and right sides of the module case, respectively,
wherein the spacer is located between the pair of end covers.

8. The battery pack according to claim 6,
wherein the venting hole is provided in plurality, and
wherein the spacer includes a first spacer provided in the first partition wall and located at a left or right side rather than the plurality of venting holes.

9. The battery pack according to claim 6,
wherein a height of the first partition wall is less than or equal to a height of the module case.

10. The battery pack according to claim 1,
wherein the partition wall includes a second partition wall extending in a front and rear direction, and
wherein the spacer includes a second spacer provided in the second partition wall.

11. The battery pack according to claim 10,
wherein a height of the second partition wall is less than or equal to a height of the module case.

12. The battery pack according to claim 1,
wherein the partition wall and the spacer are configured integrally.

13. The battery pack according to claim 1, further comprising;
a fastening member configured to fasten the pack cover and the spacer.

14. The battery pack according to claim 1,
wherein the pack cover has a fastening hole coupled with the spacer and extending long in the left and right direction.

15. The battery pack according to claim 1, further comprising:
a venting device provided to the case.

16. A vehicle comprising the battery pack according to any one of claims 1 to 15.
